Europäisches Patentamt

**European Patent Office**

**Office européen des brevets**

(19)

(11) Publication number:

**0 023 524**
A1

(12) **EUROPEAN PATENT APPLICATION**

(21) Application number: **79301508.2**

(22) Date of filing: **30.07.79**

(51) Int. Cl.³: **F 24 J 1/00**

(43) Date of publication of application: **11.02.81**
**Bulletin 81/6**

(84) Designated Contracting States: **BE CH DE FR GB LU NL SE**

(71) Applicant: **Szloboda, David Tibor, 10591 Skagit Drive, Richmond British Columbia, V7E 1Z9 (CA)**

(72) Inventor: **Szloboda, David Tibor, 10591 Skagit Drive, Richmond British Columbia, V7E 1Z9 (CA)**

(74) Representative: **Jones, Graham H., Graham Jones & Company 48 Mereworth Drive Shooters Hill, London SE18 3EE (GB)**

(54) **The new method of energy, substitute for fossil and atomic fuel.**

㋧ When water is suddenly exposed to the heat of 1,000 degrees celsius temperature, in not a complete, but a partial confinement, a difference will occur in the molecular expansion of the elements that make up water. By escaping through an opening, can be ignited. When blown into the same environment, will continuously burn, releasing smokeless clean energy of heat.

This method includes the use of a converter, acting as a heat exchanger, and an environment chamber.

To start this process of function, the environment chamber and the converter in it, to be preheated to the said temperature. Using clean water from any source, pressurized, lead into the converter, heated, ignited. When it is done so, it will generate its own environment, that is, it will become self generating.

ACTORUM AG

- 1 -

0023524

DISCLOSURE

Contains:  1)  The scientific explanation of the principle.

2)  The method of using water as combustible fuel

3)  Observations, made in the actual use of the process.

1)  The scientific explanation of the principle;

This invention is based on the physical principle, that different elements need different amount of heat to arrive at the same temperature in the same time.

To compare the specific heat capacities of different elements, it is to define a quantity in terms of unit mass of element. The specific heat capacity of an element is the amount of heat required per unit change in temperature per unit mass of element. The elements that make up water are Hydrogen, with its mass numbered 1, and Oxygen with its mass numbered 16. Therefore the mass of Oxygen needs 16 times more amount of heat, or 16 times longer period of time for heat exchange, to reach the same temperature as the mass of Hydrogen. The lighter element is making up by velocity for its difference in mass and its temperature. In the confinement of an enclosure the two elements, with their difference in velocity will collide with each other and will cause kinetics, or energy in motion. This energy in motion caused by the instantaneous heat of 1,000 degrees celsius temperature, caused by the shortness of time, caused by the extreme difference in velocity, caused by the confinement of not a complete, but a partial enclosure, caused by the extreme collision, will push apart the two elements, to behave each his own, to escape through the opening from the confinement of the partial enclosure, with the difference of 16 times in the velocity and the temperature of each, and not to unite or combine thereafter. Hydrogen, an inertic gas, when ignited at the point of escape from the partial confinement, will burn, Oxygen will not. By maintaining the $1,000^{o}$ celsius temperature in and around the point of escape, in this case, combustion takes longer time, then the whole process itself, combustion will be continuous.

This invention does not claim to include a new physical principle, only the use of the already existing ones.

- 2 -

0023524

2)  The method of using water as combustible fuel;

Clean water is taken from any source, pressurized to a maximum of 5kgcm$^2$ pressure, using a reductor valve, allowing the use of lower pressure if required, lead through a needle valve to regulate the amount of flow, lead to the converter.

The converter is made of a high temperature alloy, that is capable to endure the prolonged conditions of 1,000$^o$ celsius temperature of the environment chamber, can be made in any size, without any change in the performance, provided the described proportions are precisely maintained.

Two pieces of cylindrical tubes to be cut, both having the length of one and a quarter times the converters outside diameter, both having the same wall thickness of one twelfth and a half part of the converters outside diameter, except one of the tubes to be smaller in diameter, having its outside diameter one three point hundred and twenty-fifth less than the other. Placing one into the other, will leave one wall thickness clearance around, between the two pipes, where on the both ends a washer of the same thickness to be inserted into that clearance, with half a thickness deeper than the pipes end surface, leaving a space, for welding the pipes and the washer in to one unit on both ends, having regard for two openings from the space between the tubes both on one end, opposite each other, both to be round, the size of one wall thickness, where in to one, the inlet, in to the other, the outlet pipe is welded, both having their inside diameter of not less than one wall thickness. The outlet pipe on its other end, bent back towards the centre of the converter, having its inside diameter reduced to a smaller round hole, to act as a nozzle having its diameter of one fiftieth and its length of one twenty-fifth part of the converters outside diameter. This hole to be at a distance from the converter, not less than three quarters of the converters outside diameter. For maximum performance, fins to be added on the inside or outside or both, parallel or slightly angular to the converter, for the purpose of giving the flame, a larger surface, for heat exchange and if angular, also to cause a turbulence in flow. This converter will perform equally well, horizontal, vertical, or angular when placed in to an environment chamber of the same direction.

The converter chamber is made of firebricks or fire clay to sustain the environment of 1,000 degrees celsius temperature, open on one end, to allow the flame to enter the furnace, or any burning chamber and on its other end a reclosable opening, convenient for the ignition or the removal of the converter when so needed.

To start the whole process the environment chamber and the converter in it, has to be preheated to 1,000 degrees celsius temperature by flame or by electrical resistance heating. When preheating by flame, then kerosene to be used. Kerosene has no residue left after vaporisation by heat, and will not cause plugging of the nozzle. Pressurized kerosene is led, by a separate line, into the converter, using a needle valve to regulate the flow, spilling a little kerosene from the converters nozzle into the environment chamber to be ignited, and so starting the heating process leaving the reclosable opening of the environment chamber open, to draw oxygen from the atmosphere. When the outburst of vapourized kerosene from nozzle starts, it has to be immediately ignited, so it won't cool down the converter. As the outburst increases, so has to be the pressurized kerosene supply, by gradually opening the needle valve. After the preheating is completed, by using a switch over valve between the kerosene and the water supply lines, by simply switching over to water, the combustion will be continuous, and the opening to be closed, as there is no longer the need for Oxygen.

When the preheating is to be done by electrical resistance heating, then the pressurized water supply to be retained by the needle valve, till preheating is completed, and opened only after having a flame of an oxyacetylene torch burning at the converters nozzle, to ignite the converted water. It is a physical principle, that 1,000 degrees celsius of heat is not a form of combustion.

3)   Observations, made in the actual use of the process;

It is better to use more converters side by side, smaller in size for maintenance purposes and for the reason of constant function. No interruptions, in case one needs replacement.

0023524

Water to be clean where obtainable, if not, water purifiers or water softeners to be used to avoid plugging the nozzle and even the whole converter, to secure trouble free, continuous function.

When the hole in the nozzle is larger than it is described to be, will cause fluctuation of pressure at the nozzle, a sudden temperature drop of the converter, the slightly converted water will be below its flashing point, will not ignite at the nozzle to burn continuously, will cause only non explosive harmless flashes of combustion from time to time, in the environment chamber, till the converter cools off completely.

When the hole in the nozzle is smaller than it is described to be, the flame blown at the converter from the nozzle, will not contain the sufficient amount of heat, necessary to be self-generating, will cause a very slow but steady temperature drop of the converter and the converted water will reach a temperature below its flashing point between 20 to 40 minutes.

All experiments to ignite, the properly converted water, by electrical ark or spark, failed. For the reason of its extreme velocity, it can be ignited only by the flame that of a nature of higher pressure and this extreme velocity will not blow away.

This invention does not intend to power tools of destruction, only to benefit men.

0023524

SPECIFICATION OF CLAIM

1)   The applicant is claiming, that he has invented a new method of industrial process and so, he is creating a new source of energy, using water as fuel, by way of combustion.

This new method can replace all previous methods of heating flame furnaces, and steam generating by using atomic fuel.

Useful only for one type of mechanical device performing work, a machine, that is powered by the expansion of heated air.

**DECLARATION**
which under Rule 45 of the European Patent Convention shall be considered, for the purpose of subsequent proceedings, as the European search report

European Patent Office

0023524

EP 79 30 1508

| The Search Division considers that the present European patent application does not comply with the provisions of the European Patent Convention to such an extent that it is not possible to carry out a meaningful search into the state of the art on the basis of all claims. Reason: | CLASSIFICATION OF THE APPLICATION (Int. Cl.³) |
|---|---|
| Meaningful search not possible on the basis of all claims. Article 52(2)(a) of the European Patent Convention. | F 24 J 1/00 |

| Place of search | Date of completion of the search | Examiner |
|---|---|---|
| The Hague | 14-11-1979 | PIEPER |

EPO Form 1504 06.78